(19) **Europäisches Patentamt**

**European Patent Office**

**Office européen des brevets**

(11) **EP 1 278 313 B1**

(12) **EUROPÄISCHE PATENTSCHRIFT**

(45) Veröffentlichungstag und Bekanntmachung des Hinweises auf die Patenterteilung:
**11.05.2005 Patentblatt 2005/19**

(51) Int Cl.⁷: **H04B 10/08**

(21) Anmeldenummer: **01117407.5**

(22) Anmeldetag: **19.07.2001**

(54) **Verfahren und Vorrichtung zur Messung des Q-Faktors eines digitalen Nachrichtenübertragungssystems**

Method and apparatus for measuring the Q-factor of a digital transmission system

Procédé et appareil pour la détermination du facteur Q dans un système de télécommunication numérique

(84) Benannte Vertragsstaaten:
**DE FR GB IT**

(43) Veröffentlichungstag der Anmeldung:
**22.01.2003 Patentblatt 2003/04**

(73) Patentinhaber: **Acterna Germany GmbH**
**72800 Eningen (DE)**

(72) Erfinder:
• **Bach, Roland**
**72667 Schlaitdorf (DE)**
• **Cheleg, Alexej**
**72800 Eningen (DE)**
• **Strohmaier, Gunter**
**72800 Eningen (DE)**

(74) Vertreter: **Klocke, Peter, Dipl.-Ing.**
**ABACUS Patentanwälte**
**Klocke Späth Barth**
**European Patent and Trademark Attorneys**
**Kappelstrasse 8**
**72160 Horb (DE)**

(56) Entgegenhaltungen:
**EP-A- 0 486 205**      **EP-A- 0 903 874**
**DE-A- 19 850 567**      **US-A- 5 585 954**

**Beschreibung**

Die vorliegende Erfindung betrifft ein Verfahren zur Messung des Q-Faktors eines digitalen Nachrichtenübertragungssystems mittels eines Q-Faktor-Messgerät. Die Erfindung betrifft außerdem ein Q-Faktor-Messgerät zur Durchführung des Verfahrens.

Zur Beurteilung der Signalqualität ist es bekannt, den Q-Faktor zu messen. Dies wird mit eigens dafür konzipierten Q-Faktor-Messgeräten durchgeführt, die in der Lage sind, auf ein unbekanntes Signal zu synchronisieren und über eine Messung der Bitfehlerrate den Q-Faktor in der jedem Fachmann bekannten Art und Weise zu berechnen (vergleiche DE 198 50 567 A1). Das Messinstrument misst das Signal-Zu-Rausch-Verhältnis (SNR) eines digitalen Übertragungssystems, wobei das gemessene Rauschen immer eine Überlagerung des externen Signalrauschens mit dem Eigenrauschen des Empfangsgeräts ist.

Die EP-A-0 486 205 beschreibt unter anderem die Korrektur des Rauschens einer Testanordnung eines optischen Verstärkers von dem Rauschen der verstärkten Anordnung, um die Messgenauigkeit zu verbessern.

Der vorliegenden Erfindung liegt die Aufgabe zugrunde, eine Möglichkeit vorzuschlagen, mit der der wahre Q-Faktor eines Eingangssignals bestimmt werden kann. Diese Aufgabe wird erfindungsgemäß mit einem Verfahren mit den Merkmalen des Anspruchs 1 sowie einem Q-Faktor-Messgerät mit den Merkmalen des Anspruchs 9 gelöst. Weitere vorteilhafte Ausgestaltungen sind den Unteransprüchen zu dem Verfahrensanspruch zu entnehmen.

Gemäß der Erfindung wird der gemessene Q-Faktor eines Eingangssignals eines zu bewertenden Nachrichtenübertragungssystems um den Eigen-Q-Faktor (Qidle) des Messgeräts korrigiert. Hierzu wird der Eigen-Q-Faktor (Qidle) in Abhängigkeit von verschiedenen Pegeln eines Eingangssignals ermittelt und der gemessene Q-Faktor korrigiert. Dies erfolgt derart, dass in einem Kalibrierschritt, der für jedes Messgerät einmalig vor der Auslieferung durchgeführt wird, mindestens zwei Q-Faktoren ermittelt werden, die in dem Messgerät als gerätespezifische Konstanten, beispielsweise in einem EPROM, abgespeichert werden und auf die bei der Ermittlung des tatsächlichen Q-Faktors zurückgegriffen wird. Die Ermittlung des tatsächlichen Q-Faktors eines Eingangssignals erfolgt durch die Korrektur des gemessenen Q-Faktors unter Berücksichtigung des jeweiligen Pegels des Eingangssignals. Das korrigierte Signal wird mittels eines speziellen Algorithmus, der nachfolgend beschrieben wird, errechnet.

Gemäß einer Ausbildung des Verfahrens wird in dem Kalibrierschritt ein erster und ein zweiter Q-Faktor mittels des Messgeräts mit zwei verschieden hohen Signalpegeln eines bekannten Eingangssignals gemessen, wobei der erste der beiden Signalpegel so gewählt wird, dass das Eigenrauschen des Messgeräts vernachlässigbar ist, und der zweite der beiden Signalpegel so gewählt wird, dass ein deutlicher Einfluss des Eigenrauschens des Messgeräts erkennbar ist. Anschließend werden die gemessenen ersten und zweiten Q-Faktoren in einem Speicher des Messgeräts abgelegt. Beim Messen des Q-Faktors eines Eingangssignals eines Nachrichtenübertragungssystems mit dem Messgerät wird der gemessene Q-Faktor um den Eigen-Q-Faktor (Qidle) des Messgeräts mittels der ersten und zweiten gespeicherten Q-Faktoren korrigiert und der tatsächliche um den Eigen-Q-Faktor (Qidle) des Messgeräts bereinigte Q-Faktor (Qsignal) des Eingangssignals ausgegeben.

Das erfindungsgemäße Verfahren ermöglicht somit, dass das eigene Rauschen des Q-Faktor-Messgeräts, das normalerweise dem Eingangssignal hinzu addiert wird, kompensiert wird. Der Eigenfehler, der um so größer ist, je größer der Q-Faktor des Signals und je schwächer das empfangene Signal ist, wird damit minimiert.

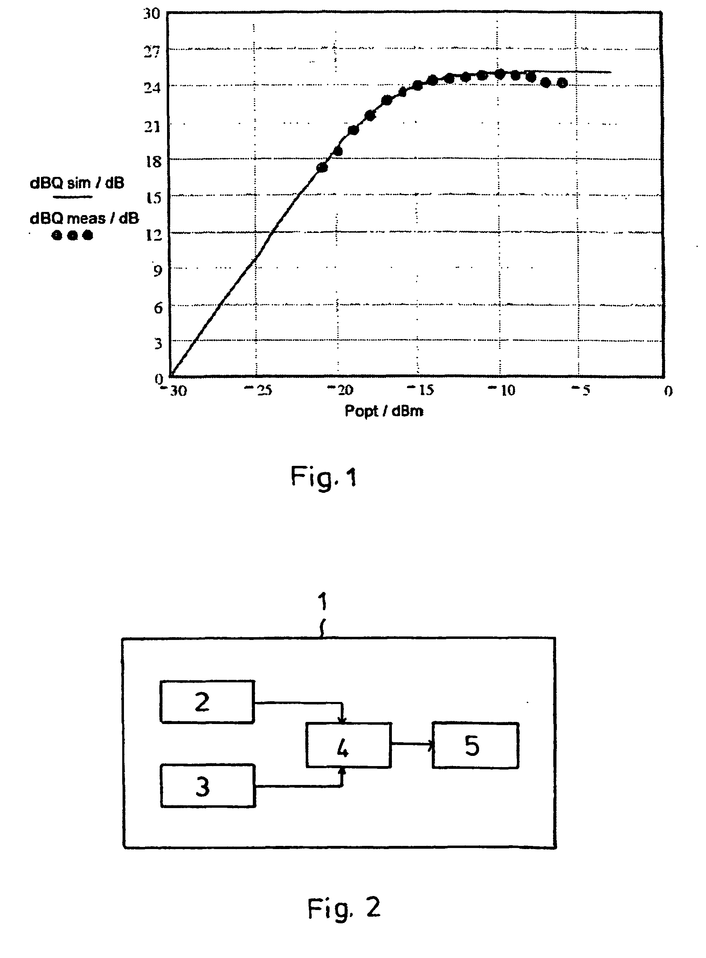

Nachfolgend wird die Erfindung noch näher erläutert. Die Figur 1 zeigt ein Diagramm, aus dem die weitgehende Übereinstimmung von Messpunkten und der theoretisch berechnenden Kurve für das elektrische Signal zu Rauschverhältnis ersichtlich ist, und die Figur 2 ein Blockschaltbild der Komponenten des Messgeräts.

Für die Kompensation des Eigenrauschens des Messgeräts wird für jedes Messgerät gesondert ein bekanntes Signal auf das Messgerät gegeben und eine erste Messung mit einem hohen Signalpegel und eine zweite Messung mit einem niedrigen Signalpegel durchgeführt. Denkbare Signalpegel sind beispielsweise - 8 dBm bzw. - 20 dBm (dBm = absolute Leistung bezogen auf 1 mW). Die Höhe der beiden Signalpegel wird dabei für den hohen Signalpegel so gewählt, dass das Eigenrauschen des Messgeräts vernachlässigbar ist und beim niedrigen Signalpegel ein deutlicher Einfluss des Eigenrauschens des Messgeräts erkennbar ist. Die beiden dabei ermittelten Q-Faktoren QN bei großem Signalpegel und Qn bei kleinem Signalpegel werden beispielsweise in einem EPROM im Messgerät gespeichert. Bei einer Q-Faktormessung des Messgeräts wird der Eigen-Q-Faktor (Qidle) gemäß der nachfolgenden Formel

$$Qidle := \frac{Popt}{\sqrt{\left(\frac{Poptn}{Qn}\right)^2 + \left(\frac{Popt}{QN}\right)^2}}$$

in Abhängigkeit der Eingangsleistung Popt des Eingangssignals errechnet, wobei Poptn die kleine Eingangsleistung ist, bei der Qn gemessen wird.

In der Figur 1 sind die theoretisch berechnete Kurve dBQsim/dB sowie die Messpunkte der gemessenen Kurve dBQmeas/db als Funktion von Popt dargestellt. Für das elektrische Signal-Zu-Rausch-Verhältnis ESNR gilt ESNRdb=20 * log (Q); dbQ ist somit Q in dB. Das Diagramm zeigt die weitgehende Übereinstimmung von Messpunkten und theoretisch berechneter Kurve.

Nach der Berechnung des Eigen-Q-Faktors (Qidle) des Messgeräts wird der wahre Q-Faktor (Q-Signal) des Eingangssignals gemäß der Formel

$$Qsignal := \frac{1}{\sqrt{\frac{1}{Qmeas^2} - \frac{1}{Qidle^2}}}$$

berechnet. Damit kann für jeden gemessenen Q-Faktor Qmeas die Kompensation vorgenommen werden.

In einem Q-Faktor-Messgerät 1, das nach der Erfindung arbeitet, befindet sich somit zusätzlich zu der üblichen Q-Faktor-Messeinrichtung 2 ein Speicher 3 für die gerätespezifischen individuellen Q-Faktoren bei hohem und niedrigem Eingangspegel des Eingangssignals sowie einer Einrichtung 4 zum Korrigieren des gemessenen Q-Faktors. Diese Einrichtung berechnet bei dem jeweiligen Eingangspegel den Eigen-Q-Faktor (Qidle) und im Anschluss daran den um Qidle bereinigten Wert (Qsignal), der dann über eine Ausgabeeinrichtung 5 ausgegeben wird.

**Patentansprüche**

1. Verfahren zur Messung des Q-Faktors eines optischen digitalen Nachrichtenübertragungssystems mittels eines Q-Faktor-Messgeräts, **dadurch gekennzeichnet, dass** der gemessene Q-Faktor eines Eingangssignals eines zu bewertenden Nachrichtenübertragungssystems um den Eigen-Q-Faktor (Qidle) des Messgeräts in Abhängigkeit von verschiedenen Pegeln eines Eingangssignals korrigiert wird.

2. Verfahren nach Anspruch 1, **dadurch gekennzeichnet, dass** in einem Kalibrierschritt vor der Durchführung von Messungen mindestens zwei Q-Faktoren (QN, Qn) ermittelt werden und vor der Ausgabe des Messergebnisses der gemessene Q-Faktor eines Eingangssignals unter Berücksichtigung dieser Q-Faktoren korrigiert wird.

3. Verfahren nach Anspruch 2, **dadurch gekennzeichnet, dass** für die Bestimmung des Eigen-Q-Faktors (Qidle) des Messgeräts in dem Kalibrierschritt ein erster (QN) und ein zweiter (Qn) Q-Faktor eines bekannten Eingangssignals mittels des Messgeräts bei zwei verschiedenen Signalpegeln des Eingangssignals ermittelt werden, wobei der erste (QN) der beiden Signalpegel so gewählt wird, dass das Eigenrauschen des Messgeräts vernachlässigbar ist, und der zweite (Qn) der beiden Signalpegel so gewählt wird, dass ein deutlicher Einfluss des Eigenrauschens des Messgeräts erkennbar ist.

4. Verfahren nach Anspruch 3, **dadurch gekennzeichnet, dass** die beiden Q-Faktorwerte in dem Messgerät gespeichert werden.

5. Verfahren nach Anspruch 1, **gekennzeichnet durch** messen eines ersten (QN) und eines zweiten (Qn) Q-Faktors mittels des Messgeräts mit zwei verschieden hohen Signalpegeln eines bekannten Eingangssignals, wobei der erste (QN) der beiden Signalpegel so gewählt wird, dass das Eigenrauschen des Messgeräts vernachlässigbar ist, und der zweite (Qn) der beiden Signalpegel so gewählt wird, dass ein deutlicher Einfluss des Eigenrauschens des Messgeräts erkennbar ist; speichern der gemessenen ersten (QN) und zweiten (Qn) Q-Faktoren in einem Speicher des Messgeräts; messen des Q-Faktors eines Eingangssignals eines Nachrichtenübertragungssystems mit dem Messgerät; korrigieren des gemessenen Q-Faktors um den Eigen-Q-Faktor (Qidle) des Messgeräts mittels der ersten und zweiten gespeicherten Q-Faktoren; Ausgabe des tatsächlichen um den Eigen-Q-Faktor (Qidle) des Messgeräts bereinigten Q-Faktor des Nachrichtenübertragungssystems.

6. Verfahren nach einem der Ansprüche 3 bis 5, **dadurch gekennzeichnet, dass** der Eigen-Q-Faktor (Qidle) für das zu messende Eingangssignal aus dem ersten und zweiten Q-Faktor (QN, Qn) in Abhängigkeit von dem Pegel des Eingangssignals ermittelt wird.

7. Verfahren nach einem der Ansprüche 3 bis 6, **dadurch gekennzeichnet, dass** der Eigen-Q-Faktor (Qidle) zur Kompensation des Eigengeräuschs des Messgeräts aus

$$Qidle := \frac{Popt}{\sqrt{\left(\frac{Poptn}{Qn}\right)^2 + \left(\frac{Popt}{QN}\right)^2}}$$

mit den Eingangsleistungen Popt des zu messenden Eingangssignals und Poptn des Eingangssignals bei dem der zweite Q-Faktor (Qn) gemessen wird, errechnet wird.

8. Verfahren nach Anspruch 7, **dadurch gekennzeichnet, dass** der tatsächliche korrigierte Q-Faktor (Qsignal) des zu bewertenden Nachrichtenübertragungssystems aus dem gemessenem Q-Faktor (Qmeas) des Eingangssignals und dem jeweiligen Eigen-Q-Faktor (Qidle) in Abhängigkeit vom Pegel des Eingangssignals gemäß der Formel

$$Qsignal := \frac{1}{\sqrt{\dfrac{1}{Qmeas^2} - \dfrac{1}{Qidle^2}}}$$

berechnet wird.

9. Q-Faktor-Messgerät zur Durchführung des Verfahrens nach einem der vorangegangenen Ansprüche mit einer Einrichtung zur Ermittlung und zur Ausgabe des Q-Faktors eines gemessenen Nachrichtenübertragungssystems **gekennzeichnet durch** eine Speichereinrichtung (3) für Korrektur faktoren, und eine Korrektureinrichtung (4) zum korrigieren des gemessenen Q-Faktors unter Berücksichtigung der gespeicherten Korrekturfaktoren.

**Claims**

1. Method for measuring the Q-factor of an optical digital communication system by means of a Q-factor measuring apparatus, **characterised in that** the measured Q-factor of an input signal to a communication system to be evaluated is corrected by the inherent Q-factor (Qidle) of the measuring apparatus in dependence on different levels of input signal.

2. Method according to claim 1, **characterised in that** at least two Q-factors (QN, Qn) are determined in a calibration step before measurements are carried out and the measured Q-factor of an input signal is corrected taking these Q-factors into account before the measurement result is output.

3. Method according to claim 2, **characterised in that**, for determining the inherent Q-factor (Qidle) of the measuring apparatus in the calibration step, a first (QN) and a second (Qn) Q-factor of a known input signal are determined by means of the measuring apparatus for two different levels of the input signal, the first (QN) of the two signal levels being so selected that the internal noise of the measuring apparatus is negligible, and the second (Qn) of the two signal levels being so selected that a clear influence of the internal noise of the measuring apparatus can be recognised.

4. Method according to claim 3, **characterised in that** the two Q-factor values are stored in the measuring apparatus.

5. Method according to claim 1, **characterised by**

  - measuring a first (QN) and a second (Qn) Q-factor by means of the measuring apparatus with two different levels of a known input signal, the first (QN) of the two signal levels being so selected that the internal noise of the measuring apparatus is negligible, and the second (Qn) of the two signal levels being so selected that a clear influence of the internal noise of the measuring apparatus can be recognised;
  - storing the measured first (QN) and second (Qn) Q-factors in a memory of the measuring apparatus;
  - measuring the Q-factor of an input signal to a communication system by means of the measuring apparatus;
  - correcting the measured Q-factor by the inherent Q-factor (Qidle) of the measuring apparatus by means of the first and second stored Q-factors;
  - output of the actual Q-factor of the communication system corrected by the inherent Q-factor (Qidle) of the measuring apparatus.

6. Method according to one of claims 3 to 5, **characterised in that** the inherent Q-factor (Qidle) for the input signal to be measured is determined from the first and second Q-factor (QN, Qn) in dependence on the level of the input signal.

7. Method according to one of claims 3 to 6, **characterised in that** the inherent Q-factor (Qidle) for compensating the internal noise of the measuring apparatus is calculated from

$$Qidle := \frac{Popt}{\sqrt{\left(\dfrac{Poptn}{Qn}\right)^2 + \left(\dfrac{Popt}{QN}\right)^2}}$$

with the input powers Popt of the input signal to be measured and Poptn of the input signal at which the second Q-factor (Qn) is measured.

8. Method according to claim 7, **characterised in that** the actual corrected Q-factor (Qsignal) of the communication system to be evaluated is calculated from the measured Q-factor (Qmeas) of the input signal and the respective inherent Q-factor (Qidle) in dependence on the level of the input signal according to the formula:

$$Qsignal := \frac{1}{\sqrt{\dfrac{1}{Qmeas^2} - \dfrac{1}{Qidle^2}}}$$

9. Q-factor measuring apparatus for carrying out the method according to one of the preceding claims and having a device for determining and outputting the Q-factor of a measured communication system, **characterised by** a storage device (3) for correction factors and a correction device (4) for correcting the measured Q-factor taking the stored correction factors into account.

## Revendications

1. Procédé pour mesurer le facteur Q d'un système de télécommunication numérique optique au moyen d'un appareil de mesure du facteur Q, **caractérisé par le fait que** l'on corrige le facteur Q mesuré d'un signal d'entrée d'un système de télécommunication à évaluer du facteur Q propre (Qidle) de l'appareil de mesure en fonction de différents niveaux d'un signal d'entrée.

2. Procédé selon la revendication 1, **caractérisé par le fait que** l'on détermine lors d'une étape de calibration précédant la prise de mesures au moins deux facteurs Q (QN, Qn) et que l'on corrige le facteur Q mesuré d'un signal d'entrée compte tenu de ces facteurs Q avant de délivrer le résultat de mesure.

3. Procédé selon la revendication 2, **caractérisé par le fait que** pour déterminer le facteur Q propre (Qidle) de l'appareil de mesure, on détermine lors de l'étape de calibration un premier (QN) et un deuxième (Qn) facteur Q d'un signal d'entrée connu au moyen de l'appareil de mesure à deux niveaux de signal différents du signal d'entrée, le premier (QN) des deux niveaux de signal étant choisi de façon que le bruit propre de l'appareil de mesure soit négligeable et le deuxième (Qn) des deux niveaux de signal étant choisi de façon qu'une nette influence du bruit propre de l'appareil de mesure soit détectable.

4. Procédé selon la revendication 3, **caractérisé par le fait que** les deux valeurs de facteur Q sont mémorisées dans l'appareil de mesure.

5. Procédé selon la revendication 1, **caractérisé par** mesure d'un premier (QN) et d'un deuxième (Qn) facteur Q au moyen de l'appareil de mesure à deux niveaux de signal différents d'un signal d'entrée connu, le premier (QN) des deux niveaux de signal étant choisi de façon que le bruit propre de l'appareil de mesure soit négligeable et le deuxième (Qn) des deux niveaux de signal étant choisi de façon qu'une nette influence du bruit propre de l'appareil de mesure soit détectable ;
   mémorisation du premier (QN) et du deuxième (Qn) facteur Q dans une mémoire de l'appareil de mesure ;
   mesure avec l'appareil de mesure du facteur Q d'un signal d'entrée d'un système de transmission d'informations ou de télécommunication ;
   correction du facteur Q mesuré du facteur Q propre (Qidle) de l'appareil de mesure au moyen des premier et deuxième facteurs Q mémorisés ;
   délivrance du facteur Q réel du système de télécommunication, corrigé du facteur Q propre (Qidle) de l'appareil de mesure.

6. Procédé selon l'une des revendications 3 à 6, **caractérisé par le fait que** l'on détermine le facteur Q propre (Qidle) pour le signal d'entrée à mesurer à partir des premier et deuxième facteurs Q (QN, Qn) en fonction du niveau du signal d'entrée.

7. Procédé selon l'une des revendications 3 à 6, **caractérisé par le fait que** l'on calcule le facteur Q propre (Qidle) pour compenser le bruit propre de l'appareil de mesure à partir de

$$Qidle := \frac{Popt}{\sqrt{\left(\frac{Poptn}{Qn}\right)^2 + \left(\frac{Popt}{QN}\right)^2}}$$

avec les puissances d'entrée Popt du signal d'entrée à mesurer et Poptn du signal d'entrée à laquelle on mesure le deuxième facteur Q (Qn).

8. Procédé selon la revendication 7, **caractérisé par le fait que** le facteur Q effectivement corrigé (Qsignal) du système de télécommunication à évaluer est calculé à partir du facteur Q mesuré (Qmeas) du signal d'entrée et du facteur Q propre (Qidle) respectif en fonction du niveau du signal d'entrée selon la formule

$$Qsignal := \frac{1}{\sqrt{\frac{1}{Qmeas^2} - \frac{1}{Qidle^2}}}$$

9. Appareil de mesure du facteur Q pour réaliser le procédé selon l'une des revendications précédentes, avec un dispositif pour déterminer et délivrer le facteur Q d'un système de télécommunication mesuré, **caractérisé par** un dispositif de mémorisation (3) de facteurs de correction et un dispositif de correction (4) pour corriger le facteur Q mesuré compte tenu des facteurs de correction mémorisés.

Fig. 1

Fig. 2